(19) Europäisches Patentamt
European Patent Office
Office européen des brevets

(11) **EP 1 689 626 B1**

(12) **EUROPÄISCHE PATENTSCHRIFT**

(45) Veröffentlichungstag und Bekanntmachung des Hinweises auf die Patenterteilung:
**30.05.2007  Patentblatt 2007/22**

(21) Anmeldenummer: **04790926.2**

(22) Anmeldetag: **27.10.2004**

(51) Int Cl.:
***B60T 13/74*** *(2006.01)*

(86) Internationale Anmeldenummer:
**PCT/EP2004/012153**

(87) Internationale Veröffentlichungsnummer:
**WO 2005/042327 (12.05.2005 Gazette 2005/19)**

(54) **VERFAHREN ZUM STABILISIEREN EINES IN EINE RUHELAGE ABGEBREMSTEN KRAFTFAHRZEUGS UND BREMSSYSTEM ZUM AUSFÜHREN DES VERFAHRENS**

METHOD FOR STABILIZING A MOTOR VEHICLE WHOSE SPEED IS REDUCED TO A REST POSITION AND BRAKE SYSTEM FOR CARRYING OUT SAID METHOD

PROCEDE DE STABILISATION D'UN VEHICULE FREINE EN POSITION DE REPOS, ET SYSTEME DE FREINAGE POUR LA MISE EN OEUVRE DE CE PROCEDE

(84) Benannte Vertragsstaaten:
**AT BE BG CH CY CZ DE DK EE ES FI FR GB GR HU IE IT LI LU MC NL PL PT RO SE SI SK TR**

(30) Priorität: **31.10.2003  DE 10351025**

(43) Veröffentlichungstag der Anmeldung:
**16.08.2006  Patentblatt 2006/33**

(73) Patentinhaber: **Lucas Automotive GmbH**
**56070 Koblenz (DE)**

(72) Erfinder:
• **SAEWE, Dirk**
**56751 Polch (DE)**
• **WAGNER, Christoph**
**68799 Reilingen (DE)**

(74) Vertreter: **Thum, Bernhard**
**Wuesthoff & Wuesthoff**
**Patent- und Rechtsanwälte**
**Schweigerstrasse 2**
**81541 München (DE)**

(56) Entgegenhaltungen:
**EP-A- 0 825 081          WO-A-02/46007**
**FR-A- 2 838 091**

EP 1 689 626 B1

**Beschreibung**

FACHGEBIET DER ERFINDUNG

Die vorliegende Erfindung betrifft ein Verfahren zum Stabilisieren eines in eine Ruhelage abgebremsten Kraftfahrzeugs, das mit einer Betriebsbremse und einer fahrer-unabhängig betätigbaren Feststellbremse ausgerüstet ist, sowie ein korrespondierendes Kraftfahrzeugbremssystem.

STAND DER TECHNIK

Es ist bereits bekannt, Kraftfahrzeugbremssysteme mit einer Betriebsbremse und einer fahrerunabhängig betätigbaren Feststellbremse auszurüsten. Beispielsweise beschreibt die EP 0 825 081 B1 ein derartiges Bremssystem, bei welchem die Betriebsbremse hydraulisch betätigt wird und die Feststellbremse elektromechanisch betätigt wird. Dies bedeutet, dass in einem Betriebsbremsmodus, beispielsweise dann, wenn das Fahrzeug in seinem Fahrbetrieb abgebremst wird, die einzelnen Räder des Fahrzeugs durch diesen zugeordnete hydraulisch betätigbare Bremseinrichtungen abgebremst werden. Wird das Fahrzeug jedoch abgestellt, das heißt wird von dem Betriebsbremsmodus in einen Feststellbremsmodus übergewechselt, so wird die Feststellbremse elektromechanisch, insbesondere über einen selbstsperrenden Mechanismus, aktiviert und in diesem Feststellbremsmodus bis zum aktiven Lösen des Feststellbremsmodus gehalten. Die EP 0 825 081 B1 schlägt bei einem derartigen Bremssystem vor, dass der Übergang von dem Betriebsbremsmodus in den Feststellbremsmodus erst dann erfolgt, wenn die von der Feststellbremse aufgebrachte Bremskraft die von der Betriebsbremse aufgebrachte Bremskraft erreicht hat. Es ist dabei zu beachten, dass die Feststellbremse bei derartigen herkömmlichen Bremssystemen lediglich die Fahrzeughinterräder bremst, wobei die Fahrzeugvorderräder ungebremst freigegeben sind, wohingegen die Betriebsbremse an allen Fahrzeugrädern, also auch an den Vorderrädern angreift. Dadurch kann es bei einem Übergang vom Betriebsbremsmodus zum Feststellbremsmodus zu Komplikationen kommen, und zwar insbesondere dann, wenn beispielsweise die Fahrbahnoberfläche im Bereich der Hinterräder keine ausreichende Haftung bietet oder wenn aufgrund einer starken Beladung oder einer großen an dem Fahrzeug angebrachten Anhängerlast allein durch die Hinterachse nicht ausreichend hohe Bremskräfte aufgebracht werden können, um das Fahrzeug an Ort und Stelle zu halten. Diese Probleme beim Übergang vom Betriebsbremsmodus in den Feststellbremsmodus können zu einem unbemerkten Wegrutschen oder Wegrollen des Fahrzeugs führen.

AUFGABE UND LÖSUNG GEMÄSS DER ERFINDUNG

Es ist demgegenüber Aufgabe der vorliegenden Erfindung, ein Verfahren zum Stabilisieren eines in eine Ruhelage abgebremsten Kraftfahrzeugs und ein entsprechendes Bremssystem für das Kraftfahrzeug bereitzustellen, bei welchen ein sicherer Übergang von dem Betriebsbremsmodus in den Feststellbremsmodus gewährleistet ist.

Diese Aufgabe wird durch ein Verfahren zum Stabilisieren eines in eine Ruhelage abgebremsten Kraftfahrzeugs sowie durch eine entsprechende Bremsanlage gelöst, welche mit einer Betriebsbremse und einer fahrerunabhängigen betätigbaren Feststellbremse ausgerüstet ist, wobei die Betriebsbremse beim Einleiten einer Aktivierung der Feststellbremse von einer ersten Bremskraftverteilung eines Betriebsbremsmodus in einen eine zweite Bremskraftverteilung der Feststellbremse simulierenden Modus übergeht und wenigstens während des Übergangs ein Zurückschalten in die erste Bremskraftverteilung des Betriebsbremsmodus ermöglicht ist.

Mit anderen Worten bedeutet dies, dass gemäß der vorliegenden Erfindung die Betriebsbremse vor einem tatsächlichen Übergang in den Feststellbremsmodus, diesen Feststellbremsmodus simuliert. Dadurch spürt der Fahrer, ob die im Feststellbremsmodus verfügbaren Bremskräfte hinreichend groß sind, um das Fahrzeug in der gewünschten Position zu halten. Bleibt das Fahrzeug in der gewünschten Position, so wird der Fahrer an dem Bremszustand nichts ändern, das heißt er wird das Fahrzeug in für ihn gewohnter Weise abstellen. Da der Fahrer an dem Bremszustand nichts verändert, findet ein Übergang von dem Betriebsbremsmodus über den die Bremskraftverteilung der Feststellbremse simulierenden Modus in den Feststellbremsmodus statt. Liegen hingegen Rahmenbedingungen vor, die während des die Bremskraftverteilung der Feststellbremse simulierenden Modus zu einer unerwünschten Bewegung des Fahrzeugs führen, beispielsweise deshalb, weil die Fahrbahn im Bereich der während des Feststellbremsmodus gebremsten Räder nicht ausreichend Haftung bietet oder weil die Beladung oder Anhängerlast des Fahrzeugs zu groß ist, um das Fahrzeug allein mit den im Feststellbremsmodus gebremsten Rädern unbewegt zu halten, so spürt dies der Fahrer während des die Bremskraftverteilung der Feststellbremse simulierenden Modus sofort und kann entsprechend reagieren. Eine derartige Reaktion führt beispielsweise zu einem erneuten Niedertreten des Bremspedals und damit zu einer entsprechenden Erhöhung der Bremskraft im Rahmen des Betriebsbremsmodus - nachfolgend auch "Zurückschalten" genannt -, so dass eine erneute Aktivierung der Feststellbremse unter Durchlaufen der Übergangsphase eingeleitet werden kann, jedoch auf höherem Bremskraftniveau. Somit kann mit der Erfindung vermieden werden, dass sich das Fahrzeug in für den Fahrer überraschender Art und Weise nach einem Übergang in den Feststellbremsmodus unerwünscht bewegt.

WEITERBILDUNGEN DER ERFINDUNG

Eine Weiterbildung der Erfindung sieht vor, dass dann, wenn kein Zurückschalten stattfindet, eine automatische Übergabe der Bremskraft von der Betriebsbremse an die Feststellbremse des Fahrzeugs erfolgt. Mit anderen Worten bedeutet dies, dass dann, wenn der Fahrer in dem die Bremskraftverteilung der Feststellbremse simulierenden Modus der Betriebsbremse eine unerwünschte Bewegung des Fahrzeugs wahrnimmt, er auch kein erneutes Betätigen der Betriebsbremse - durch Niedertreten des Bremspedals - vornimmt und somit das Fahrzeug in herkömmlicher Art und Weise abstellt. Eine derartige automatische Übergabe der Bremskraft von der Betriebsbremse an die Feststellbremse des Fahrzeugs kann erfindungsgemäß beispielsweise nach einem vorbestimmten Zeitintervall erfolgen. Mit anderen Worten bedeutet dies, dass das Zurückschalten in den Betriebsbremsmodus innerhalb eines vorbestimmten Zeitintervalls ermöglicht ist.

Dabei kann weiter vorgesehen sein, dass zu Beginn des Zeitintervalls die Betriebsbremse in den die Feststellbremse simulierenden Modus übergeht. Hinsichtlich der Verteilung der Bremskraft auf einzelne Räder des Fahrzeugs ist bei einer Ausführungsform der Erfindung vorgesehen, dass die Betriebsbremse in dem die Feststellbremse simulierenden Modus eine auf die Räder von mindestens zwei Fahrzeugachsen wirkende Bremskraft der Betriebsbremse auf ausgewählte Räder, insbesondere auf die Räder einer Fahrzeugachse oder auf die auf ein und derselben Fahrzeugseite angeordneten Räder, verteilt. So ist es möglich, die Feststellbremsfunktion durch das Anlegen einer Bremskraft an verschiedene Räder, beispielsweise auch in Abhängigkeit von Umgebungsbedingungen zu realisieren. Wird beispielsweise anhand von Drehzahlsensorausgangssignalen oder einer Radschlupferfassungseinrichtung erfasst, dass eines oder mehrere Räder auf der Fahrbahnoberfläche wegrutschen, beispielsweise weil diese vereist ist, so kann die zur Realisierung der Feststellbremsfunktion erforderliche Bremskraft situationsabhängig an diejenigen Räder angelegt werden, welche ausreichende Bodenhaftung aufweisen.

Eine Weiterbildung der Erfindung sieht vor, dass in dem Zeitraum, während dem sich die Betriebsbremse in dem die Bremskraftverteilung der Feststellbremse simulierenden Modus befindet, zusätzlich eine Haltekraft der Feststellbremse aufgebaut wird. Dies kann beispielsweise gegen Ende des Zeitraums erfolgen, während dem die Betriebsbremse in den die Bremskraftverteilung der Feststellbremse simulierenden Modus übergeht. Ferner kann in diesem Zusammenhang vorgesehen sein, dass die Haltekraft der Feststellbremse bis zu einem zweiten Zeitpunkt am Ende des Zeitraums aufgebaut wird.

Hinsichtlich der Änderung der Bremskraft an einzelnen Fahrzeugrädern sieht eine Weiterbildung der Erfindung vor, dass im Rahmen der automatischen Bremskraftverteilung die Bremskraft der Betriebsbremse an einer vorderen Fahrzeugachse stetig abgebaut und an ausgewählten Rädern, insbesondere an Rädern einer hinteren Fahrzeugachse, so lange aufgebaut wird, bis die Bremskraftverteilung der Feststellbremse erreicht ist. Ferner kann in diesem Zusammenhang vorgesehen sein, dass nach dem zweiten Zeitpunkt des Zeitintervalls die gesamte Bremskraft der Betriebsbremse an die Haltekraft der Feststellbremse übergeben wird. Dadurch kann gewährleistet werden, dass im Feststellbremsmodus eine hinreichend große Haltekraft vorliegt, um einen zuverlässigen Feststellbremsmodus zu gewährleisten.

Wird der Feststellbremsmodus wieder aufgehoben, beispielsweise nach einer erneuten Inbetriebnahme des Fahrzeugs, so kann vorgesehen sein, dass die Feststellbremse beim Anfahren des Kraftfahrzeugs unmittelbar gelöst wird, ohne den Übergang der Betriebsbremse in den die Feststellbremse simulierenden Modus. Dies bedeutet, dass der beim Aktivieren des Feststellbremsmodus vollzogene Übergang über den die Bremskraftverteilung der Feststellbremse simulierenden Modus beim Lösen der Feststellbremse nicht durchgeführt wird, da er beim Lösen der Feststellbremse auch nicht erforderlich ist. Der Fahrer wird gewöhnlich beim Lösen der Feststellbremse bereits über eine Betätigung des Gaspedals und gegebenenfalls mit schleifender Kupplung hinreichende Vortriebskräfte bereitstellen, die ein unerwünschtes Zurückrollen des Fahrzeugs verhindern. Alternativ wird der Fahrer die Betriebsbremse beim Lösen der Feststellbremse aktivieren, wobei auf alle Fahrzeugräder über die Betriebsbremse eine Bremskraft bzw. Haltekraft ausgeübt wird.

Die Erfindung trifft auch für den Fall einer Anfahrhilfe zu, das heißt für den Fall, dass das Fahrzeug automatisch nach einmaliger Betätigung der Betriebsbremse zum Anhalten an einer Steigung diesen Betriebszustand erkennt und die Betriebsbremse derart ansteuert, dass sie das Fahrzeug an der Steigung hält, ohne dass das Bremspedal dauerhaft betätigt werden müsste. Man spricht in diesem Zusammenhang auch von einer "Hillhold"-Funktion. Dieser Bremsmodus der Anfahrhilfe bzw. "Hillhold"-Funktion ist in der Regel zeitlich auf einige Sekunden beschränkt, wobei nach Ablauf der vorbestimmten Zeit die Bremskraft bzw. Haltekraft in der Betriebsbremse selbsttätig abgebaut wird. Eine Weiterbildung der Erfindung sieht in diesem Zusammenhang vor, dass im Falle einer Anfahrhilfe im Antriebsstrang des Kraftfahrzeugs mit Schaltgetriebe die Übergabe der Haltekraft der Feststellbremse an die Bremskraft der Betriebsbremse beim Anfahren des Kraftfahrzeugs in zu dem Ablauf beim Anhalten umgekehrter Reihenfolge abläuft. Dies bedeutet, dass auch während des Anfahrhilfe- bzw. "Hillhold"-Modus die Betriebsbremse in den die Bremskraftverteilung der Feststellbremse simulierenden Modus übergeht. Es sei noch darauf verwiesen, dass die Bremskräfte bzw. Haltekräfte im Anfahrhilfe-Modus auch dann entsprechend auf Null reduziert werden, wenn der Fahrer mit dem Fahrzeug wieder los fährt.

Eine Weiterbildung der Erfindung sieht vor, dass die Stabilitätssteuerung der Feststellbremse und/oder der Betriebsbremse in einem Stabilitätssystem des Fahrzeugs integriert ist. Eine derartige integrale Lösung erlaubt eine verhältnismäßig einfache Realisierung der Erfindung indem die Steuerung des Stabilitätssystems genutzt werden kann.

Ferner sieht eine Ausführungsform der Erfindung vor, dass die Betätigung der Feststellbremse des Fahrzeugs elektromechanisch erfolgt.

Die Erfindung wird im Folgenden anhand der beiliegenden Figuren beispielhaft erläutert. Es stellen dar:

Fig. 1          eine schematische Darstellung der Räder eines Kraftfahrzeugs und

Fig.2a bis 2c   verschiedene Kraft-Zeit-Diagramme zu den auf die einzelnen Kraftfahrzeugräder wirkenden Brems- bzw. Haltekräften.

BESCHREIBUNG BEVORZUGTER AUSFÜHRUNGSBEISPIELE

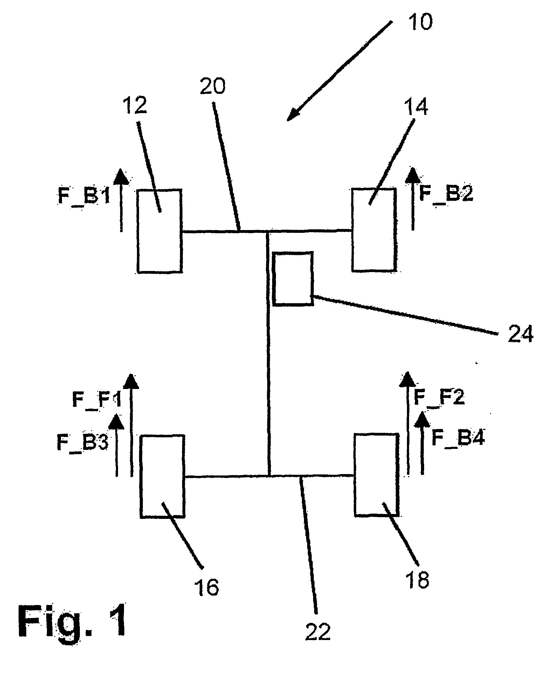

In Fig.1 ist ein allgemein mit 10 bezeichnetes schematisch dargestelltes Kraftfahrzeug gezeigt. Dieses weist vier Räder auf, nämlich die beiden Vorderräder 12 und 14 sowie die beiden Hinterräder 16 und 18.

Die beiden Vorderräder 12 und 14 sind über eine Vorderachse 20 gekoppelt während die beiden Hinterräder über eine Hinterachse 22 gekoppelt sind. Auf alle vier Räder 12, 14, 16 und 18 wirkt eine Betriebsbremse, deren Steuerung allgemein mit 24 bezeichnet ist. Im Betriebsbremsmodus wirkt auf das Vorderrad 12 die Betriebsbremskraft $F\_B1$, auf das Vorderrad 14 die Betriebsbremskraft $F\_B2$, auf das Hinterrad 16 die Betriebsremskraft $F\_B3$ und auf das Hinterrad 18 die Betriebsbremskraft $F\_B4$. Im Feststellbremsmodus hingegen, beispielsweise dann, wenn das Fahrzeug abgestellt wurde, wirken im Beispielsfall lediglich auf die beiden Hinterräder 16 und 18 Haltekräfte, nämlich auf das Hinterrad 16 die Haltekraft $F\_F1$ und auf das Hinterrad 18 die Haltekraft $F\_F2$. Diese Haltekräfte werden von der Feststellbremse aufgebracht.

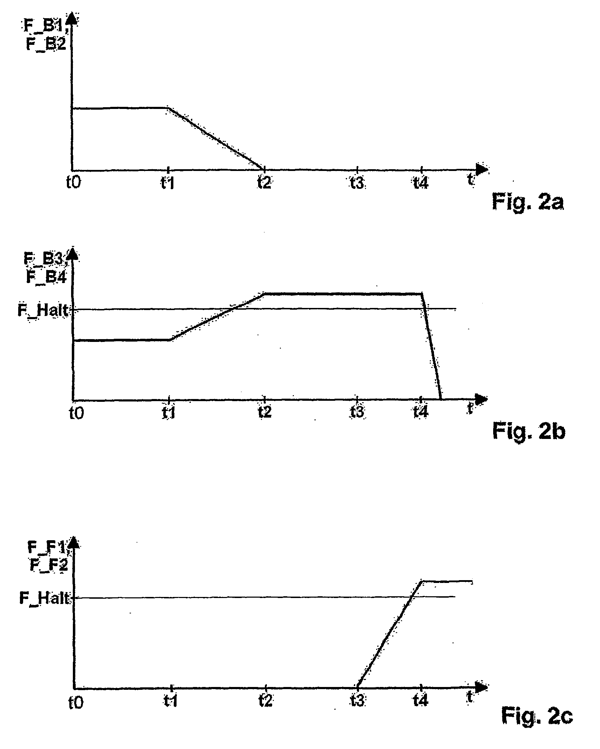

Im Folgenden wird mit Bezug auf Figur 2 das Zusammenwirken von Betriebsbremse und Feststellbremse gemäß der Erfindung beschrieben. Dabei zeigt Fig.2a den Bremskraftverlauf an den Vorderrädern beim Übergang aus dem Betriebsbremsmodus über den die Feststellbremse simulierenden Modus der Betriebsbremse in den Feststellbremsmodus. Fig.2b zeigt den Verlauf der von der Betriebsbremse aufgebrachten Bremskräfte an den Hinterrädern 16 und 18 beim Übergang aus dem Betriebsbremsmodus über den die Feststellbremse simulierenden Modus der Betriebsbremse in den Feststellbremsmodus. Fig.2c zeigt den Verlauf der von der Feststellbremse aufgebrachten Haltekräfte während des Übergangs in den Feststellbremsmodus.

Zum Zeitpunkt t0 liegen in dem gezeigten Ausführungsbeispiel an den Vorderrädern 12, 14 sowie an den Hinterrädern 16, 18 jeweils in etwa gleiche Bremskräfte vor. Die Bremsanlage des Fahrzeugs 10 befindet sich in einem Betriebsbremsmodus, das heißt das Fahrzeug wird beispielsweise aus einer Fahrt abgebremst und kommt an einer Steigung zum Stehen. Die Gesamtbremskraft $F\_BGES$ am Fahrzeug setzt sich somit zusammen aus den einzelnen an den Rädern 12 bis 18 wirkenden Bremskräfte. Dies bedeutet:

$$F\_BGES(t0) = F\_B1(t0) + F\_B2(t0) + F\_B3\ (t0) + F\_B4(t0)$$

Zum Zeitpunkt t1 wird ein Übergang aus dem Betriebsbremsmodus in den Feststellbremsmodus eingeleitet. Dies bedeutet, dass der Fahrer, beispielsweise durch Betätigung eines Hebels, Pedals oder Knopfes, die Feststellbremse aktiviert oder dass das Fahrzeug selbsttätig, beispielsweise aufgrund einer Aktivierung der Anfahrhilfe bzw. "Hillhold"-Funktion selbsttätig die Feststellbremse aktiviert.

Bevor jedoch die Feststellbremse tatsächlich aktiviert wird, wird zum Zeitpunkt t1 bis zum Zeitpunkt t2 die Bremskraft bzw. Haltekraft an den Vorderrädern 12 und 14 reduziert, wie in Fig.2a gezeigt. Parallel dazu wird an den Hinterrädern 16 und 18 die Bremskraft bzw. Haltekraft erhöht und zwar auf einen Wert, der höher liegt als die zum Stabilisieren des Fahrzeugs erforderliche Haltekraft.

Die erforderliche Haltekraft $F\_Halt$ ist diejenige Kraft, die das Feststellbremssystem mindestens aufbringen muss, um das Kraftfahrzeug sicher im Stillstand zu halten. Sie hängt unter anderem von der Neigung der Fahrbahn, auf der sich das Kraftfahrzeug befindet, vom Beladungszustand des Kraftfahrzeugs und von der Bremsentemperatur ab. Zum Zeitpunkt t2 werden also lediglich die Hinterräder 16 und 18 über die Betriebsbremse, die im Beispielsfall hydraulisch angesteuert wird, gebremst und zwar mit einer Bremskraft, die größer als die mindestens zum Sicherstellen des Fahrzeugstillstands erforderliche Bremskraft ist.

In der Folge wird dieser Zustand der über die Betriebsbremse des Fahrzeugs lediglich auf die Hinterräder angelegten Bremskraft von dem Zeitpunkt t2 über einen Zeitpunkt t3 bis zu einem Zeitpunkt t4 gehalten. In dem Zeitraum zwischen t2 und t4 bleibt dem Fahrer des Fahrzeugs ausreichend Zeit, um - unbewusst - zu beobachten, ob die von der Bremsanlage über die Betriebsbremse herbeigeführte, das heißt von der Betriebsbremse simulierte, Feststellbremsfunktion ausreichend ist, um den Stillstand des Fahrzeugs in der gewählten Position zu gewährleisten. Daher ist der Zeitraum von t2 bis t4 ausreichend groß zu bemessen, um dem Fahrer Gelegenheit zu geben, die ordnungsgemäße Feststellbremsfunktion wahrzunehmen. Verharrt das Fahrzeug während des Zeitraums zwischen t2 und t4 in seiner Position auf der Fahrbahn, das heißt findet keine unbeabsichtigte Fahrzeugbewegung statt, so wird der Fahrer an dem Zustand nichts ändern. Zum Zeitpunkt t3 beginnt dann das Bremssystem des Fahrzeugs selbsttätig damit, die Feststellbremse zu aktivieren und die über die Feststellbremse auf die Hinterräder ausgeübten Haltekräfte auf dasselbe Niveau anzuheben, wie in dem Zeitraum zwischen t2 und t4 von der Betriebsbremse auf die Hinterräder ausgeübt. Zum Zeitpunkt t4 erreicht die Feststellbremse Bremskräfte F_F1 und F_F2, die betragsmäßig gleich den über die Betriebsbremse vorangehend zum Zeitpunkt t3 ausgeübten Bremskräften F_B3 und F_B4 sind. Dies bedeutet, dass nun tatsächlich die Feststellbremse eine ausreichende Brems- bzw. Haltekraft aufbringt, um den Stillstand des Fahrzeugs zu gewährleisten, ohne dass ein unerwünschtes Bewegen des Fahrzeugs erfolgt. Es gilt also:

$$F\_F1(t4) + F\_F2(t4) = F\_B3(t3) + F\_B4(t3) =$$

$$= F\_B1(t1) + F\_B2(t1) + F\_B3(t1) + F\_B4(t1)$$

Sodann kann zum Zeitpunkt t4 und in der Folgezeit die Betriebsbremse deaktiviert werden, was beispielsweise durch Reduzierung des Hydraulikdrucks innerhalb des Betriebsbremssystems erfolgt. In der Folge hält die Feststellbremse das Fahrzeug in seinem still stehenden Zustand, wie bei herkömmlichen Feststellbremsen üblich.

Kommt es allerdings in dem Zeitraum zwischen t2 und t4 zu einer unerwünschten Fahrzeugbewegung, beispielsweise deshalb, weil die Fahrbahnoberfläche im Bereich der gebremsten Hinterräder keine ausreichend Haftung bietet oder weil die Fahrzeugbeladung bzw. eine Anhängerlast zu groß ist, um die erforderliche Bremskraft allein über die Hinterräder des Fahrzeugs aufzubringen, so wird der Fahrer, nachdem er zum Zeitpunkt t1 die Aktivierung der Feststellbremsfunktion initiiert hat, beispielsweise durch nochmaliges Niedertreten des Bremspedals die über die Betriebsbremse aufgebrachte Bremskraft erhöhen. Dies kann dazu führen, dass die Betätigung der Feststellbremsfunktion abgebrochen wird und erneut - beispielsweise auf einem höheren Bremskraftniveau - durch erneutes Betätigen einer Auslösevorrichtung aktiviert werden muss. Jedenfalls kann durch die vorangehend beschriebene Simulation des Feststellbremsmodus mittels der Betriebsbremse in dem Zeitraum zwischen t2 und t4 verhindert werden, dass der Fahrer von einer unzureichenden Funktionsweise der Feststellbremse überrascht wird oder gar ein Unfall aufgrund einer unzureichenden Feststellbremsfunktion auftritt.

Es ist anzumerken, dass vorstehende Beschreibung des bevorzugten Ausführungsbeispiels davon ausgeht, dass die Feststellbremsfunktion lediglich durch Anlegen einer Bremskraft an den Hinterrädern des Fahrzeugs erreicht wird. Es ist jedoch im Rahmen der Erfindung gleichermaßen möglich, die Feststellbremsfunktion durch gezieltes Auswählen verschiedener Räder, beispielsweise lediglich der Räder an der Vorderachse des Fahrzeugs oder zweier Räder, die sich auf ein und derselben Fahrzeugseite befinden oder eines bzw. mehrerer Räder, die gerade die beste Bodenhaftung aufweisen, realisiert werden kann.

Gleichermaßen liegt es im Rahmen der Erfindung, dass die verschiedenen Schritte des vorstehend mit Bezug auf Fig.2 erörterten erfindungsgemäßen Verfahrens auch dann ausgelöst werden, wenn in dem Kraftfahrzeug eine sogenannte Anfahrhilfe- oder "Hillhold"-Funktion ausgeführt wird, die selbsttätig die Feststellbremsfunktion aktiviert, obgleich die dafür vorgesehene Auslösevorrichtung von dem Fahrer nicht aktiv betätigt wurde. Auch in einem derartigen Fall kann das erfindungsgemäße Verfahren zur Anwendung kommen.

**Patentansprüche**

1. Verfahren zum Stabilisieren eines in eine Ruhelage abgebremsten Kraftfahrzeugs (10), das mit einer Betriebsbremse und einer fahrerunabhängig betätigbaren Feststellbremse ausgerüstet ist, **dadurch gekennzeichnet, dass** die Betriebsbremse beim Einleiten einer Aktivierung der Feststellbremse von einer ersten Bremskraftverteilung eines Betriebsbremsmodus in einen eine zweite Bremskraftverteilung der Feststellbremse simulierenden Modus übergeht und zumindest während des Übergangs ein Zurückschalten in die erste Bremskraftverteilung des Betriebsbremsmodus ermöglicht ist.

2. Verfahren nach Anspruch 1,

**dadurch gekennzeichnet, dass** dann, wenn kein Zurückschalten stattfindet, eine automatische Übergabe der Bremskraft (F_B3, F_B4) von der Betriebsbremse an die Feststellbremse des Fahrzeugs erfolgt.

3. Verfahren nach Anspruch 2,
**dadurch gekennzeichnet, dass** das Zurückschalten in den Betriebsbremsmodus innerhalb eines vorbestimmten Zeitintervalls (t1-t3) ermöglicht ist.

4. Verfahren nach Anspruch 3,
**dadurch gekennzeichnet, dass** zu Beginn des Zeitintervalls (t1-t3) die Betriebsbremse in den die Feststellbremse simulierenden Modus übergeht.

5. Verfahren nach einem der Ansprüche 1 bis 4,
**dadurch gekennzeichnet, dass** die Betriebsbremse in dem die Feststellbremse simulierenden Modus eine auf die Räder (12, 14, 16, 18) von mindestens zwei Fahrzeugachsen (20, 22) wirkende Bremskraft (F_B1, F_B2, F_B3, F_B4) der Betriebsbremse auf ausgewählte Räder (16, 18), insbesondere auf die Räder (16, 18) einer Fahrzeugachse (22) oder auf die auf ein und derselben Fahrzeugseite angeordneten Räder, verteilt.

6. Verfahren nach einem der Ansprüche 1 bis 5,
**dadurch gekennzeichnet, dass** in dem Zeitraum (t2-t4), während dem die Betriebsbremse sich in dem die Bremskraftverteilung der Feststellbremse simulierenden Modus befindet, zusätzlich eine Haltekraft der Feststellbremse aufgebaut wird.

7. Verfahren nach Anspruch 6,
**dadurch gekennzeichnet, dass** die Haltekraft (F_F1, F_F2) der Feststellbremse bis zu einem zweiten Zeitpunkt (t4) am Ende des Zeitraums (t2-t4) aufgebaut wird.

8. Verfahren nach einem der vorangehenden Ansprüche,
**dadurch gekennzeichnet, dass** im Rahmen der automatischen Bremskraftverteilung die Bremskraft (F_B1, F_B2) der Betriebsbremse an einer vorderen Fahrzeugachse (20) stetig abgebaut und an ausgewählten Rädern (16, 18), insbesondere an Rädern (16, 18) einer hinteren Fahrzeugachse (22), so lange aufgebaut wird, bis die Bremskraftverteilung der Feststellbremse erreicht ist.

9. Verfahren nach einem der Ansprüche 7 oder 8,
**dadurch gekennzeichnet, dass** nach dem zweiten Zeitpunkt (t4) des Zeitraums (t2-t4) die gesamte Bremskraft (F_B3, F_B4) der Betriebsbremse an die Haltekraft (F_P1, F_F2) der Feststellbremse übergeben wird.

10. Verfahren nach einem der obigen Ansprüche,
**dadurch gekennzeichnet, dass** die Feststellbremse beim Anfahren des Kraftfahrzeugs (10) unmittelbar gelöst wird, ohne den Übergang der Betriebsbremse in den die Feststellbremse simulierenden Modus.

11. Verfahren nach einem der obigen Ansprüche,
**dadurch gekennzeichnet, dass** im Falle einer Anfahrhilfe im Antriebsstrang des Kraftfahrzeugs (10) mit Schaltgetriebe die Übergabe der Haltekraft der Feststellbremse an die Bremskraft der Betriebsbremse beim Anfahren des Kraftfahrzeugs in umgekehrter Reihenfolge eines Haltevorgangs abläuft.

12. Verfahren nach einem der obigen Ansprüche,
**dadurch gekennzeichnet, dass** die Stabilitätssteuerung der Feststellbremse und/oder der Betriebsbremse in einem Stabilitätssystem des Fahrzeugs (10) integriert ist.

13. Verfahren nach einem der obigen Ansprüche , **dadurch gekennzeichnet, dass** die Betätigung der Feststellbremse des Fahrzeugs elektromechanisch erfolgt.

14. Bremssystem für ein Fahrzeug (10) zum Ausführen des Verfahrens nach einem der vorangehenden Ansprüche, umfassend eine Betriebsbremse und eine fahrerunabhängig betätigbare Feststellbremse,
**dadurch gekennzeichnet, dass** die Betriebsbremse beim Einleiten einer Aktivierung der Feststellbremse von einer ersten Bremskraftverteilung eines Betriebsbremsmodus in einen eine zweite Bremskraftverteilung der Feststellbremse simulierenden Modus übergeht und wenigstens während des Übergangs ein Zurückschalten in die erste Bremskraftverteilung des Betriebsbremsmodus ermöglicht ist.

**Claims**

1. Method for stabilising a motor vehicle (10) which is decelerated into a rest position and provided with a service brake and with a parking brake which is adapted to be actuated independently of the driver,
   **characterised in that**, when activation of the parking brake is initiated, the service brake changes from a first braking-force distribution of a service brake mode to a mode simulating a second braking-force distribution of the parking brake, and a switch-back to the first braking-force distribution of the service brake mode is enabled at least during the transition.

2. Method according to claim 1,
   **characterised in that** the braking force (F_B3, F_B4) is automatically transferred from the service brake to the parking brake of the vehicle when no switch-back takes place.

3. Method according to claim 2,
   **characterised in that** the switch-back to the service brake mode is enabled within a predetermined time interval (t1-t3).

4. Method according to claim 3,
   **characterised in that** the service brake changes to the mode simulating the parking brake at the beginning of the time interval (t1-t3).

5. Method according to any one of claims 1 to 4,
   **characterised in that**, in the mode simulating the parking brake, the service brake distributes a braking force (F_B1, F_B2, F_B3, F_B4) of the service brake acting on the wheels (12, 14, 16, 18) of at least two vehicle axles (20, 22) to selected wheels (16, 18), in particular to the wheels (16, 18) of one vehicle axle (22) or to the wheels disposed on one and the same vehicle side.

6. Method according to any one of claims 1 to 5,
   **characterised in that** a holding force of the parking brake is additionally built up in the period (t2-t4) during which the service brake is in the mode simulating the braking-force distribution of the parking brake.

7. Method according to claim 6,
   **characterised in that** the holding force (F_F1, F_F2) of the parking brake is built up until a second instant (t4) at the end of the period (t2-t4).

8. Method according to any one of the preceding claims,
   **characterised in that**, in the course of the automatic braking-force distribution, the braking force (F_B1, F_B2) of the service brake is steadily reduced at a front vehicle axle (20) and built up at selected wheels (16, 18), in particular at wheels (16, 18) of a rear vehicle axle (22), until the braking-force distribution of the parking brake is attained.

9. Method according to one of claims 7 or 8,
   **characterised in that** the entire braking force (F_B3, F_B4) of the service brake is transferred to the holding force (F_F1, F_F2) of the parking brake following the second instant (t4) of the period (t2-t4).

10. Method according to any one of the preceding claims,
    **characterised in that** the parking brake is directly released upon starting the motor vehicle (10) without the service brake changing to the mode simulating the parking brake.

11. Method according to any one of the preceding claims,
    **characterised in that**, when there is a starting aid in the drive train of the motor vehicle (10) with a change-speed gearbox, the transfer of the holding force of the parking brake to the braking force of the service brake when starting the vehicle takes place in a sequence which is the reverse of that of a stopping process.

12. Method according to any one of the preceding claims,
    **characterised in that** the stability control of the parking brake and/or of the service brake is integrated into a stability system of the vehicle (10).

13. Method according to any one of the preceding claims,

**characterised in that** the parking brake of the vehicle is actuated electromechanically.

14. Brake system for a vehicle (10) for carrying out the method according to any one of the preceding Claims, comprising a service brake and a parking brake which is adapted to be actuated independently of the driver, **characterised in that**, when activation of the parking brake is initiated, the service brake changes from a first braking-force distribution of a service brake mode to a mode simulating a second braking-force distribution of the parking brake, and a switch-back to the first braking-force distribution of the service brake mode is enabled at least during the change.

**Revendications**

1. Procédé destiné à stabiliser un véhicule automobile (10) immobilisé en position de repos, lequel est équipé d'un frein de service et d'un frein de stationnement apte à être actionné indépendamment du conducteur, **caractérisé en ce que**, au moment du déclenchement d'une activation du frein de stationnement, le frein de service commute d'une première répartition de la force de freinage d'un mode avec frein de service dans un mode simulant une deuxième répartition de la force de freinage du frein de stationnement et une commutation en retour dans la première répartition de la force de freinage du mode avec frein de service est possible au moins pendant le passage d'un mode à l'autre.

2. Procédé selon la revendication 1, **caractérisé en ce que**, lorsque aucune commutation en retour n'est effectuée, il se produit une transmission automatique de la force de freinage (F_B3, F_B4) depuis le frein de service vers le frein de stationnement du véhicule.

3. Procédé selon la revendication 2, **caractérisé en ce que** la commutation en retour vers le mode avec frein de service est possible à l'intérieur d'un intervalle de temps (t1-t3) prédéterminé.

4. Procédé selon la revendication 3, **caractérisé en ce que**, au début de l'intervalle de temps (t1-t3), le frein de service commute dans le mode simulant le frein de stationnement.

5. Procédé selon l'une quelconque des revendications 1 à 4, **caractérisé en ce que**, dans le mode simulant le frein de stationnement, la force de freinage (F_B1, F_B2, F_B3, F_B4) du frein de service, agissant sur les roues (12, 14, 16, 18) d'au moins deux essieux (20, 22) du véhicule, est répartie par le frein de service sur des roues (16, 18) sélectionnées, en particulier sur les roues (16, 18) d'un essieu (22) du véhicule ou sur les roues montées sur un seul et même côté du véhicule.

6. Procédé selon l'une quelconque des revendications 1 à 5, **caractérisé en ce que**, dans l'intervalle de temps (t2-t4), pendant lequel le frein de service est dans le mode simulant la répartition de la force de freinage du frein de stationnement, le frein de stationnement développe en plus une force d'immobilisation.

7. Procédé selon la revendication 6, **caractérisé en ce que** la force d'immobilisation (F_F1, F_F2) du frein de stationnement est développée jusqu'à un deuxième moment (t4) à la fin de l'intervalle de temps (t2-t4).

8. Procédé selon l'une quelconque des revendications précédentes, **caractérisé en ce que**, dans le cadre de la répartition automatique de la force de freinage, la force de freinage (F_B1, F_B2) du frein de service sur un essieu avant (20) est relâchée en continu et sur des roues (16, 18) sélectionnées, en particulier les roues (16, 18) d'un essieu arrière (22), est développée jusqu'à ce que la répartition de la force de freinage du frein de stationnement soit atteinte.

9. Procédé selon la revendication 7 ou 8, **caractérisé en ce que**, après le deuxième moment (t4) de l'intervalle de temps (t2-t4), la totalité de la force de freinage (F_B3, F_B4) du frein de service est transmise à la force d'immobilisation (F_F1, F_F2) du frein de stationnement.

10. Procédé selon l'une quelconque des revendications précédentes, **caractérisé en ce que** le frein de stationnement est débloqué directement au démarrage du véhicule sans que le frein de service passe dans le mode simulant le frein de stationnement.

11. Procédé selon l'une quelconque des revendications précédentes, **caractérisé en ce que**, dans le cas d'une aide au démarrage dans la ligne de transmission du véhicule (10) avec boîte de vitesses mécanique, la transmission de la force d'immobilisation du frein de stationnement à la force de freinage du frein de service au moment du démarrage du véhicule se déroule dans l'ordre inverse d'un processus d'immobilisation.

**12.** Procédé selon l'une quelconque des revendications précédentes, **caractérisé en ce que** la commande de stabilité du frein de stationnement et/ou du frein de service est intégrée dans un système de contrôle de stabilité du véhicule (10).

**13.** Procédé selon l'une quelconque des revendications précédentes, **caractérisé en ce que** le frein de stationnement du véhicule est actionné par voie électromécanique.

**14.** Système de freinage pour un véhicule (10) destiné à la mise en oeuvre du procédé selon l'une quelconque des revendications précédentes, comportant un frein de service et un frein de stationnement apte à être actionné indépendamment du conducteur, **caractérisé en ce que**, au moment du déclenchement d'une activation du frein de stationnement, le frein de service commute d'une première répartition de la force de freinage d'un mode avec frein de service dans un mode simulant une deuxième répartition de la force de freinage du frein de stationnement et une commutation en retour dans la première répartition de la force de freinage du mode avec frein de service est possible au moins pendant le passage d'un mode à l'autre.

**Fig. 1**

**Fig. 2a**

**Fig. 2b**

**Fig. 2c**